# EUROPÄISCHE PATENTANMELDUNG

(11) **EP 1 341 017 A2**
(43) Veröffentlichungstag der Anmeldung: **03.09.2003**
(21) Anmeldenummer: 03002317.0
(22) Anmeldetag: 03.02.2003
(51) Int. Cl.: G02B 6/42, A61C 19/00

(54) **Bestrahlungsgerät mit flexiblem Lichtleitkabel**

(30) Priorität: 20.02.2002 DE 10207171
(71) Anmelder: Heraeus Med GmbH, D-63450 Hanau (DE)
(72) Erfinder: Schmidt, Jochen, 60488 Frankfurt (DE); Wilde, Rainer, 61440 Oberursel (DE)
(74) Vertreter: Schaumburg, Thoenes & Thurn

(57) **Zusammenfassung**

Ein Bestrahlungsgerät für medizinische und/oder zahntechnische Anwendungen weist ein flexibles Lichtleitkabel mit einem flexiblen Außenmantel auf, der ein Bündel flexibler Lichtleiter aus Kunststoff umgibt, wobei das eine Ende des Lichtleitkabels zwecks Einkopplung von Strahlung bzw. Licht mit einer Strahlenquelle verbunden ist, während das andere Ende des Lichtleitkabels mit einem Handgerät versehen ist, welches die im Endbereich des Lichtleitkabels austretende Strahlung auf ein Bestrahlungsobjekt richtet. Um eine verhältnismäßig hohe Strahlungsleistung ohne Schädigung der temperaturempfindlichen Lichtleiter aus Kunststoff zu übertragen, ist im Bereich der Einkopplung ein Kernmantelstab mit optischem filter vorgesehen, welcher wenigstens eine als Interferenzfilter ausgebildete Beschichtung aufweist, die eine Schädigung der Kunststofflichtleiter durch Wärmestrahlung verhindert.

## Beschreibung

Die Erfindung betrifft ein Bestrahlungsgerät mit einem flexiblen Lichtleitkabel, von dem ein erstes Ende als Lichteintritt ausgebildet ist, während das andere Ende mit einem Lichtaustritt sowie mit einem Handgerät versehen ist, wobei das flexible Lichtteil-Kabel wenigstens einen Lichtleiter aus einem Kern und einen den Kern umgebenden Mantel jeweils aus transparentem Werkstoff aufweist, wobei der Brechungsindex (Brechzahl) des Mantel-Werkstoffs kleiner ist als der des Kern-Werkstoffs.

Das Bestrahlungsgerät kann eingesetzt werden zur medizinischen Bestrahlung oder zur zahnmedizinischen oder zahntechnischen Anwendung, insbesondere zur Polymerisation von Dentalkunststoffen.

Aus der EP 570 665 A1 ist ein Lichtteiler für ein Bestrahlungsgerät für medizinische und/oder zahntechnische Anwendungen mit einem flexiblen Mittelstück als Flüssigkeits-Lichtleiter bekannt, wobei an einem ersten Ende des Mittelstücks ein Anschlussstück und an dessen anderem Ende ein Griffstück mit einem Lichtaustrittsteil angeordnet ist.

Um einen Lichtleiter zu schaffen, dessen Griffstück auf einfache Weise mehrfach montiert und demontiert werden kann und der dabei in jeder Lage einen konstanten Strahlungsaustritt ermöglicht, ist an dem griffseitigen Ende des Mittelstücks eine Verbindungshülse fest aufgesetzt, die mit einer Ringnut des Griffstücks zusammenwirkt; dabei sind die Verbindungshülse und die Ringnut über kugelförmige Rastelemente lösbar ineinander gesteckt, so dass sie in Eingriff stehen, wobei die Verbindungshülse und die Verbindungsteile über die Rastelemente hinsichtlich ihrer Achsen zentriert sind.

Als problematisch erweist sich bei Flüssigkeits-Lichtleitern die geringe Flexibilität in der Handhabung, wobei sich dies insbesondere bei größeren Durchmessern des Lichtleiters störend auswirkt.

Weiterhin ist es aus der EP 237 995 A2 bekannt, optische Lichtleitfasern mit einem Kern aus aushärtbarem Kunststoff herzustellen, der von einem Mantel aus einem Polymer oder Copolymer umgeben ist, welcher einen Brechungsindex besitzt, der wenigstens ein Prozent kleiner als der des Kernmaterials ist. Das aushärtbare Material wird aus der Gruppe aus Epoxidharz, Phenolharz und Urethanharz ausgewählt. Üblicherweise wird PMMA eingesetzt.

Weiterhin ist es aus der US 5,857,053 bekannt, eine optische Filterung der Strahlung bei Lichtleitern vorzunehmen, wobei die Filterwirkung durch Abätzen eines äußeren Abschnitts einer doppelten Ummantelung erzielt wird.

Aufgabe der Erfindung ist es, Licht bzw. Strahlung von einer Strahlenquelle auf ein Bestrahlungsobjekt - wie z.B. auf lichthärtenden Kunststoff oder auf eine Wunde eines Patienten - zu bringen, wobei ein Handgerät mit Strahlenaustritt zum Objekt über ein flexibles lichtleitendes Mittelstück eines Lichtleitkabels mit der Strahlenquelle verbunden ist und eine Schädigung des flexiblen Lichtleitkabels als Mittelstück - insbesondere durch Wärmestrahlung - vermieden wird; die Anordnung soll möglichst kostengünstig herzustellen sein.

Die Aufgabe wird erfindungsgemäß dadurch gelöst, dass das Lichtleitkabel einen flexiblen Außenmantel aufweist, der ein Bündel aus wenigstens zwei flexiblen Lichtleitern umgibt, wobei die Lichtleiter aus Kunststoff bestehen

Vorteilhafte Ausgestaltungen des Gegenstandes nach Anspruch 1 sind in den Ansprüchen 2 bis 10 angegeben.

Als besonders vorteilhaft erweist es sich, dass das flexible Lichtleitkabel als Mittelstück eine hohe Flexibilität aufweist, wobei aufgrund des geringen Gewichtes auch eine einfache Handhabung in der Anwendung möglich ist. Weiterhin kann der Durchmesser des Kabels den jeweiligen Anforderungen an die Strahlungsintensität angepasst werden. Aufgrund des Einsatzes von Kunststofflichtleitfasern ergibt sich eine kostengünstige Möglichkeit der Herstellung.

In einer bevorzugten Ausgestaltung ist im Bereich des Lichteintritts wenigstens ein optisches Filter vorgesehen, das einen auf die Anwendung angepassten Durchlassbereich hat, der vorzugsweise für Wellenlängen bis 520 nm reicht. Der Lichteintritt weist einen Kernmantelstab als starren Lichtleiter auf, welcher auf seiner Lichtaustrittsseite benachbart zum Bündel der Lichtleiter angeordnet ist, wobei in axialer Richtung gesehen zwischen dem Kernmantelstab und dem Bündel zwecks thermischer Entkopplung ein Spalt im Bereich von 0,1 bis 4mm vorliegt; der Kernmantelstab ist vorzugsweise sowohl auf seiner Lichteintrittsseite als auch auf seiner Lichtaustrittsseite jeweils mit einem optischen Filter versehen.

Als optisches Filter wird jeweils ein Interferenzfilter als Beschichtung eingesetzt; dabei weist ein (erstes) Interferenzfilter im Spektralbereich für Wellenlängen von 400 bis 520 nm einen relativen spektralen Transmissionsgrad im Bereich von 93 bis 100 % auf; darüber hinaus ist es möglich, auf der Lichtaustrittsseite des Kernmantelstabes ein zusätzliches (bzw. zweites) Interferenzfilter einzusetzen, das im Spektralbereich für Wellenlängen größer als 520 nm für einen relativen spektralen Transmissionsgrad von weniger als 1% sorgt.

Das dem Kernmantelstab benachbarte erste Ende des Lichtleitkabels weist eine das Bündel der Lichtleiter umgebende Hülse aus thermisch gut leitendem Werkstoff - vorzugsweise Aluminium - auf. Der Kernmantelstab wird ebenfalls von der Hülse umgeben.

Das Handgerät bzw. das Griffteil weist eine formstabile Hülse mit einem Bündel von wenigstens zwei Lichtleitern auf, deren Länge sich vom Verbindungsbereich am zweiten Ende des Lichtleitkabels bis zum Lichtaustrittsbereich des Handgeräts erstreckt. Die Lichtleiter im Griffteil bestehen aus Glas oder Quarzglas.

Im folgenden ist der Gegenstand anhand der Figuren 1a, 1b, 2a, 2b und 3 näher erläutert.
Figur 1a zeigt schematisch das Lichtleitkabel als Mittelstück mit seinen beiden Enden, an denen jeweils ein Lichtleiter aus Glas bzw. ein als Glasstab ausgebildeter Anschluss zur Strahlenquelle vorgesehen ist.
Figur 1b stellt schematisch die Strahlenquelle mit optischem Anschluss zwecks Einkopplung der Strahlung in das hier symbolisch dargestellte Lichtleitkabel dar, dessen Strahlenaustritt zum ebenfalls symbolisch dargestellten Bestrahlungsobjekt gerichtet ist.
Figur 2a zeigt schematisch einen einzelnen Lichtleiter im Querschnitt;
Figur 2b zeigt schematisch das Lichtleitkabel im Querschnitt, wobei ein Bündel aus einer Vielzahl von einzelnen Lichtleitfasern bzw. Lichtleitern erkennbar ist.
Figur 3 zeigt im Diagramm den mittels optischer Filterung erzielten relativen spektralen Transmissionsgrad in Abhängigkeit von der Wellenlänge.

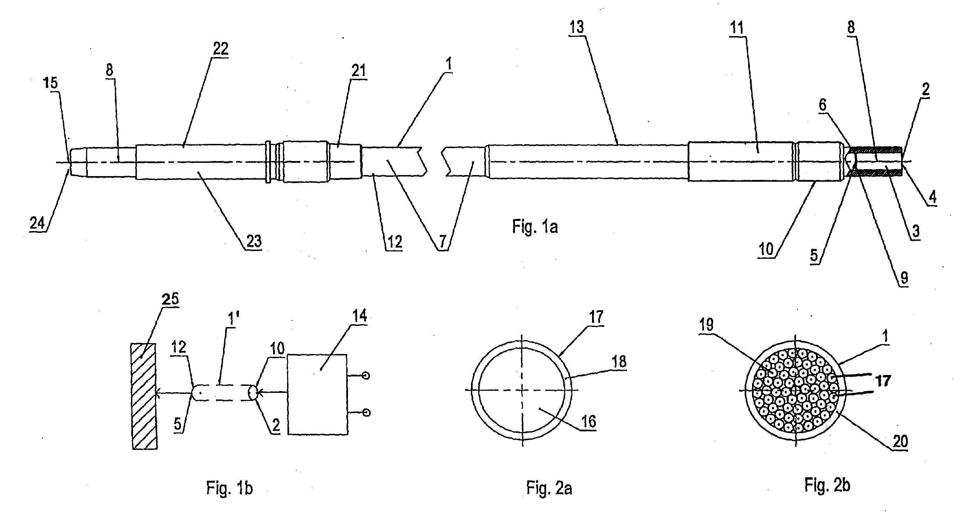

Gemäß Figur 1a tritt Strahlung aus einer (in Figur 1b schematisch dargestellten) Strahlenquelle in einen Kernmantelstab 3 am ersten Ende 10 eines Lichtleitkabels 1 ein, wobei der Kernmantelstab 3 zumindest im Bereich seines Lichteintritts 2 mit einem Filter 4 - vorzugsweise als Interferenzfilter-Beschichtung - versehen ist, um die als flexible Lichtleiter dienende Kunststofffaser im sich anschließenden Bereich des Lichtleitkabels 1 vor zu starker Temperatur durch Wärmestrahlung bzw. vor zu hohem Strahlfluss zu schützen. Gegebenenfalls kann die Bandbreite des zu übertragenden Lichts, bzw. der zu übertragenden Strahlung zusätzlich durch ein im Austrittsbereich 5 des Kernmantelstabes 3 befindliches Filter 6 - vorzugsweise ebenfalls als Interferenzfilter-Beschichtung - im Transmissionsgrad eingeschränkt werden.

Das entlang der optischen Achse 8 aus dem Kernmantelstab 3 austretende Licht wird über einen Spalt 9 zum lichteintrittsseitigen Ende 10 des Lichtleitkabels 1 mit seinen gebündelten Kunststofffasern geleitet, wobei durch den Spalt 9 ein Abstand zwischen Kernmantelstab 3 und den Kunststofffasern des Lichtleitkabels 1 zwecks thermischer Entkopplung gebildet wird.

Weiterhin ist das lichteintrittsseitige Ende 10 des Lichtleitkabels 1 von einer Aluminium-Hülse 11 zwecks Wärmeabfuhr umgeben, so dass die thermische Belastung der Kunststofffasern des Kabels aufgrund der eintretenden Strahlung weiterhin minimiert wird. Die Aluminium-Hülse 11 kann auch zusätzlich den Kernmantelstab 3 umfassen, so dass eine optimale Wärmeabfuhr gewährleistet ist.

Darüber hinaus ist das vom lichteintrittsseitigen Ende 10 zum lichtaustrittsseitigen Ende 12 führende Teilstück des Lichtleitkabels 1 ausgehend von der Aluminiumhülse 11 mit einem als Mantel ausgebildeten Knickschutz 13 zum Schutz der im Lichtleitkabel 1 befindlichen Lichtleiter aus Kunststofffasern versehen, so dass auch eine abrupte starke Belastung ausgehend vom Anwender durch Biegen oder Knicken nicht zu einem Bruch der Lichtleiterfasern im Lichtleitkabel 1 führt. Der Knickschutz 13 reicht bis zum Mittelstück 7 des Lichtleitkabels 1.

Gemäß Figur 1b tritt aus der hier nur schematisch dargestellten Strahlenquelle 14 das Licht bzw. die austretende Strahlung zwecks Einkopplung in den Lichteintritt 2 des hier nur schematisch dargestellten Lichtleitkabels 1' ein, wobei das Lichtleitkabel 1' zwecks vereinfachter Darstellung auch den lichteintrittsseitigen Kernmantelstab, die Aluminiumhülse, den Knickschutz sowie das Handgerät mit Lichtaustritt bzw. Strahlenaustritt als Gesamtanordnung umfasst. Die auf der Lichtaustrittsseite 15 des Lichtleitkabels 1' austretende Strahlung ist auf ein hier symbolisch im Querschnitt dargestelltes Bestrahlungsobjekt 25 gerichtet, wobei im Bereich der Lichtaustrittsseite auf eine Knickschutz für das Lichtleitkabel 1 verzichtet wird, um eine möglichst hohe Beweglichkeit für den Anwender zu gewährleisten.

Der innere Aufbau von Lichtleitkabel 1 ist nachfolgend anhand der Querschnittsdarstellung des Mittelstücks 7 in Figur 2b näher erläutert, in der eine Vielzahl einzelner flexibler Lichtleiter 17 gemäß Figur 2a gebündelt dargestellt ist.

Figur 2a zeigt im Querschnitt einen einzelnen Lichtleiter 17, der nach dem Prinzip eines optischen Wellenleiters zur Führung von Licht in dielektrischen Fasern arbeitet, wobei der die Strahlung führende Kern 16 von einem Mantel 18 umgeben ist, um Abstrahlverluste zu vermeiden. Der Brechungsindex des Materials von Kern 16 ist dabei stets größer als der des Materials von Mantel 18.

Gemäß dem Querschnitt in Figur 2b (senkrecht zur Achse des Lichtleitkabels geschnitten) weist das Lichtleitkabel 1 ein Lichtleiter-Bündel 19 mit einer Vielzahl von einzelnen Lichtleitern 17 aus Kunststoff auf, die von einer äußeren flexiblen Ummantelung bzw. einem Außenmantel 20 umgeben sind. Die einzelnen Lichtleiter 17 weisen eine hohe Beständigkeit gegenüber thermischer Belastung (bis zu 80°C) sowie auch eine hohe chemische Beständigkeit auf. In der Praxis hat sich ein Durchmesser eines Lichtleiter-Bündels 19 im Bereich von 5 mm bis 10 mm bewährt, wobei der eigentliche Lichtleiterdurchmesser im Bereich von 0,25 bis 0,5 mm liegt.

Zur besseren Übersicht ist gemäß Figur 1a das flexible Mittelstück 7 des Lichtleitkabels 1 nur bruchstückweise dargestellt. Nach Durchlaufen des Lichtleiterbündels im Lichtleitkabel 1 tritt die übertragene Strahlung am lichtaustrittsseitigen Ende 12 des Mittelstücks 7 in den Lichteintritt 21 von Handgerät 22 ein, welches zwecks Übertragung der Strahlung vom Ende 12 des Mittelstücks zum Objekt ein Bündel verhältnismäßig starre Lichtleiter aus Glas bzw. Quarzglas aufweist, wobei die Außendurchmesser der einzelnen Lichtleitfasern im Bereich von 50 bis 70 µm liegen. Das eigentliche Handgerät 22 weist in seinem mittleren Bereich ein Griffteil 23 auf, welches somit das darin befindliche Lichtleiterbündel umgibt. Im Bereich der zum Bestrahlungsobjekt gerichteten Licht-Austrittsseite 15 weist das Bündel aus den verhältnismäßig starren Lichtleitfasern eine Lichtaustrittsebene 24 auf, die senkrecht zur Achse der einzelnen Lichtleiter bzw. der optischen Achse 8 angeordnet ist.

Die Brechzahlen von Mantel- und Kernwertstoff liegen üblicherweise im Bereich von 1,4 bis 1,5, wobei die Brechzahl (Brechungsindex) des Mantelwerkstoffs stets kleiner ist als die des Kernwerkstoffs; das Verhältnis der Brechzahlen wird dabei so gewählt, dass an der Lichtaustrittsseite 15 wenigstens ein öffnungswinkel von 60° entsteht.

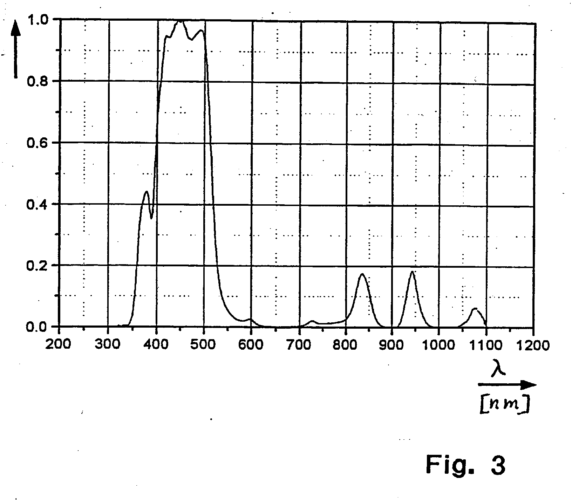

Anhand Figur 3 ist der relative spektrale Transmissionsgrad τ im Bereich der Lichteintrittsseite in Abhängigkeit von der Wellenlänge λ (in nm) dargestellt, wobei aufgrund der Filterung im Lichteintritt (Filter 4 als Beschichtung gemäß Figur 1a) ein Transmissionsgrad im Spektral-Bereich von 400 nm bis 515 nm von ca. 70% erreicht wird, während die für die Wärmeentwicklung besonders kritischen Spektralbereiche von 800 bis 960 nm im nahen Infrarotbereich bis auf einen Wert von ca. 18% gedämpft werden können. Weiterhin ist im Spektral-Bereich von ca. 360 bis 380 nm ein stark gedämpftes Maximum (UV-Bereich) erkennbar, dessen Maximum bei ca. 45% des relativen spektralen Transmissionsgrades liegt, so dass auch eine Dämpfung des für die Wärmeentwicklung relativ unbedeutenden UV-Bereiches erzielt wird.

Auf diese Weise ist es möglich, eine verhältnismäßig hohe Strahlungsleistung durch das Lichtleitkabel ohne Schädigung der aus Kunststoff bestehenden Lichtleiter zu übertragen.

## Patentansprüche

1. Bestrahlungsgerät mit einem flexiblen Lichtleit-Kabel, von dem ein erstes Ende als Lichteintritt ausgebildet ist, während das andere Ende mit einem Lichtaustritt sowie mit einem Handgerät verbunden ist, wobei das flexible Lichtteil-Kabel wenigstens einen Lichtleiter aus einem Kern und einen den Kern umgebenden Mantel jeweils aus transparentem Werkstoff aufweist, wobei der Brechungsindex des Mantel-Werkstoffs kleiner ist als der des Kern-Werkstoffs, **dadurch gekennzeichnet, dass** das Lichtleit-Kabel (1) einen flexiblen Außenmantel (20) aufweist, der ein Bündel (19) aus wenigstens zwei flexiblen Lichtleitern (17) umgibt, wobei die Lichtleiter (17) aus Kunststoff bestehen.

2. Bestrahlungsgerät nach Anspruch 1, dass im Bereich des Lichteintritts (2) wenigstens ein optisches Filter (4) vorgesehen ist, das einen Durchlassbereich für Strahlung mit einer Wellenlänge bis 520 nm aufweist.

3. Bestrahlungsgerät nach Anspruch 1 oder 2, **dadurch gekennzeichnet, dass** der Lichteintritt (2) einen Kernmantelstab (3) als starren Lichtleiter aufweist, welcher auf seiner Lichtaustrittsseite benachbart zum Bündel (19) der Lichtleiter (17) angeordnet ist, wobei in axialer Richtung gesehen zwischen dem Kernmantelstab (3) und dem Bündel (19) ein Spalt (9) mit einem Abstand im Bereich von 0,1 bis 4 mm vorliegt.

4. Bestrahlungsgerät nach Anspruch 3, **dadurch gekennzeichnet, dass** der Kernmantelstab (3) sowohl auf der Seite des Lichteintritts (2) als auch auf seiner Lichtaustrittsseite (5) jeweils mit einem optischen Filter (4, 6) versehen ist.

5. Bestrahlungsgerät nach Anspruch 4, **dadurch gekennzeichnet, dass** als optisches Filter (4, 6) jeweils ein Interferenzfilter eingesetzt wird.

6. Bestrahlungsgerät nach Anspruch 5, **dadurch gekennzeichnet, dass** wenigstens ein Interferenzfilter im Spektralbereich für Wellenlängen von 400 bis 520 nm einen relativen spektralen Transmissionsgrad im Bereich von 93 bis 100 % aufweist.

7. Bestrahlungsgerät nach einem der Ansprüche 3 bis 6, **dadurch gekennzeichnet, dass** das dem Kernmantelstab (3) benachbarte lichteintrittsseitige Ende (10) des Lichtleit-Kabels (1) eine den Außenmantel (20) für das Bündel (19) der Lichtleiter (17) umgebende Hülse (11) aus thermisch gut leitendem Werkstoff aufweist.

8. Bestrahlungsgerät nach Anspruch 7, **dadurch gekennzeichnet, dass** auch der Kernmantelstab (3) von der Hülse (11) umgeben ist.

9. Bestrahlungsgerät nach einem der Ansprüche 1 bis 8, **dadurch gekennzeichnet, dass** das Handgerät (22) eine formstabile Hülse als Griffteil (23) mit einem Bündel von wenigstens zwei Lichtleitern aufweist, deren Länge sich vom lichtaustrittsseitigen Ende (12) des Lichtleit-Kabels (1) bis zum Lichtaustrittsbereich (5) des Griffteils (23) erstreckt.

10. Bestrahlungsgerät nach Anspruch 9, **dadurch gekennzeichnet, dass** die Lichtleiter im Handgerät (22) aus Glas oder Quarzglas bestehen.
